# EUROPEAN PATENT SPECIFICATION

(11) **EP 3 593 000 B1**
(45) Date of publication and mention of the grant of the patent: **24.02.2021**
(21) Application number: 18907481.8
(22) Date of filing: 21.05.2018
(51) Int. Cl.: F16C 33/64, F16C 19/52, F16C 33/58, F16C 33/62

(54) **ELECTRICAL INSULATED ROLLER BEARING PRODUCTION METHOD**
VERFAHREN ZUR HERSTELLUNG EINES ELEKTRISCHEN ISOLIERTEN WÄLZLAGERS
PROCÉDÉ DE PRODUCTION DE PALIER À ROULEAUX ISOLÉS ÉLECTRIQUES

(30) Priority: 09.05.2018 TR 201806576
(43) Date of publication of application: 15.01.2020
(73) Proprietor: Ortadogu Rulman Sanayi Ve Ticaret Anonim Sirketi, 06900 Ankara (TR)
(72) Inventor: MERDANE, Hamdullah, 06900 Ankara (TR)
(74) Representative: Berkkam, Ayfer
(86) International application number: PCT/TR2018/050256
(87) International publication number: WO 2019/216841

(56) References cited:
- EP-A1- 1 408 249
- EP-A2- 0 417 744
- JP-A- 2014 201 392
- US-A1- 2001 014 545
- US-A1- 2001 014 545
- US-A1- 2013 084 033
- US-A1- 2013 084 033
- US-A1- 2017 284 468

## Description

### Technical Field

The invention is related to the electrical insulated roller bearing production method.

The invention is more particularly related to the method including the coating of the outer diameter and the sidewall surfaces of the bearing outer ring with polyamide in order to enable electrical insulation of the roller bearings and at the same time, to enable the protection of the parts which are not desired to be coated with polyamide.

### Prior Art

Especially in the large electric engines, a current jump from the stator via the roller bearing in which the rotor (shaft) is housed is observed. The high voltage electrical current, jumps from the roller bearing outer ring mounted onto the body of the stator to the bearing rolling elements-and from there to the inner ring of the roller bearing and then to the rotor into which the inner ring is mounted. During this occurrence, there is an arc jump between the bearing rolling elements and bearing outer and/or inner ring raceways which are in friction with each other. As a result, the rolling elements and ring raceway surfaces act as if there is an instantaneous spot-weld and when there is relative motion between the rolling elements and rings raceway surfaces and breaking of parts occur from the rolling elements and/or ring raceway surfaces.

Immediately after this, the roller bearing is destructed and becomes dysfunctional with the increase of heat, sound and vibration.

In order to prevent this, as a solution, it is proposed that the current passage from the stator to the bearing outer ring and from there to the rolling elements should be prevented, or in other words electrical insulation should be provided.

One of these solution methods is the coating of the bearing outer ring with ceramic which is an insulating material in which there is Al oxide and Ti oxide. However, since there is current jump from these pores due to the ceramic being porous, these pores should be coated with special material.

On the other hand, since the ceramic material is fragile, it is both difficult to be processed after the coating and the coated parts could be broken during shipping, processing and mounting.

In another method, the insulating material is mounted between the housing in which the bearing is mounted and the bearing outer ring. In this method, since the measurement precision of the insulating ring-shaped part to be mounted in the gap cannot be the same as the bearing ring, the method causes axial misalignment and early damaging of the roller bearings as a result.

Another method is slipping a polyamide ring on the outer diameter of the roller bearing. This method resembles the method of mounting an insulating material between the housing in which the bearing is mounted and the bearing outer ring, and the insulating material is mounted onto the bearing outer ring by opening a slot on the outer ring. However, this both requires additional work and causes axial misalignments, hence, early damaging of the bearings.

Another method is using insulating (ceramic) rolling elements. However, the life span of the ceramic rolling elements is short due to the relative low operating speed of the electric motors. The main usage area of the ceramic balls is the bearings operating on high speed, which is over 20.000 rev/min since their masses are low.

In the International patent document number WO2018050159A1 of the known state of the art, a bearing ring having an electrically insulating coating is mentioned. It is mentioned that this coating is coated with plastic using the flame spraying method of thermal spraying methods.

In the international patent document numbered WO2011128325 of the known state of the art, the method of coating the bearing outer ring with polyamide (polyamide-11 or polyamide-12) in order to provide electric insulation is mentioned. The subject coating is carried out by spraying.

In the United States patent document numbered US9646737B2 of the known state of the art, the method of applying electric insulation to the bearing is mentioned. The method subject to the application comprises the steps of applying the ceramic material to the bearing body and coating plastic material on the ceramic layer

In the patent document US2017284468A1, a method for applying a pure aluminium coating on a bearing ring comprises the step of masking the raceways of the bearing ring.

In the Japanese patent document JP2014201392A, a manufacturing method for coating bearing rings with diamond-like carbon coating comprises the step of stacking the bearing rings.

However, in these electrical insulated bearing production methods, no method was encountered in which the surfaces which will not be coated with polyamide are protected while carrying out the coating of the outer diameter and sidewall surfaces of the bearing outer ring with polyamide.

Due to these reasons, realization of a method which provides the coating of the outer diameter and the sidewall surfaces of the bearing outer ring with polyamide and at the same time, provides protection of the parts that will not be coated with polyamide is needed.

### Purpose of the Invention

The purpose of the invention is to provide coating of the outer diameter and sidewall surfaces of the outer ring of the bearing with polyamide in order to enable electric insulation of the roller bearings.

Another purpose of this invention is to provide a method in which the raceway of the bearing outer ring is protected efficiently at the same time while the polyamide coating procedure is carried out.

### Detailed Description of the Invention

The invention is an electrical insulated bearing production method according to claim 1. It comprises the following steps:
- stacking bearing outer rings on top of each other in such a way that their side surfaces are in contact with each other,
- applying liquid seal or rubber spray which contains silicon and which is resistant to heat up to 270C° on to the raceway of the outer rings which will not be coated with polyamide,
- cleaning the external sidewall surface of the topmost of outer rings stacked on top of each other from the liquid seal or rubber spray containing heat resistant silicon by wiping this sidewall surface with perchloroethylene-impregnated cloth,
- coating the outer diameter and sidewall surfaces of the outer rings with primer by hanging the same on a bracket,
- heating the outer rings whose outer diameter and sidewall surfaces have been coated with primer to over 186C°, which is the melting temperature of the polyamide, by placing outer rings in a furnace,
- adhering the polyamide powders to the outer diameter and sidewall surfaces of the outer rings by melting.

An exemplary method can comprise
the below mentioned steps:
- grinding the outer diameter and sidewall surfaces of the outer rings of the bearing according to measurement, so that they are ready to be coated,
- sandblasting the outer diameter and sidewalls of the outer rings of the bearing,
- stacking bearing outer rings on top of each other in such a way that their side surfaces are in contact with each other,
- applying liquid seal or rubber spray which contains silicon and which is heat-resistant up to 270C° to the rolling path surface of the outer rings that will not be coated with polyamide,
- cleaning the external sidewall of the topmost of outer rings stacked on top of each other from the liquid seal or rubber spray containing heat resistant silicon by wiping this sidewall with perchloroethylene-impregnated cloth,
- coating the outer diameter and sidewall surfaces of the outer rings with primer by hanging the outer rings on a bracket using an immersion or spraying technique,
- heating the outer rings whose outer diameter and sidewall surfaces have been coated with primer to over 186C°, which is the melting temperature of the polyamide, by placing outer rings in furnace,
- immersing the heated outer rings into a fluidized polyamide powder bath,
- adhering the polyamide powders onto the outer diameter and sidewall surfaces of the outer rings by melting,
- leaving the outer rings to cool afterwards,
- cleaning the liquid seal or rubber spray on the surfaces which will not be coated with polyamide from the outer ring,
- turning and grinding the outer rings after the outer rings are cooled in order to bring the same to the desired outer diameter and sidewall width measure.

In the method subject to the invention, the outer ring is processed at pre-mounting measures aside from the outer diameter which will be coated with polyamide. The outer diameter is brought to the measure as low as the polyamide coating thickness (0,2 - 0,4 mm) to be applied by turning or grinding.

In said method, the liquid seal or rubber spray which contains silicon which is heat-resistant up to 270C° is applied to the raceway surfaces that will not be polyamide coated. Thereafter, the outer sidewall surface of the outer ring is wiped with perchloroethylene-impregnated cloth and it is provided that this sidewall surface is cleaned from the liquid seal or rubber spray which contains heat-resistant silicone.

An apparatus suitable for the outer rings whose surfaces which will not be coated with polyamide are protected before entering the polyamide coating line is attached to the same and by means of this apparatus, the outer rings are hanged on the conveyor system of the polyamide coating line.

The outer rings hanged on the conveyor are coated with a primer by the immersing or spraying method.

The outer rings on which primer is applied are placed in a furnace with the conveyor moving and kept until the outer rings reach a temperature above 186C° which is the melting temperature of the polyamide.

The outer rings that reached the desired temperature are taken out of the furnace by means of the conveyor and immersed into fluidized polyamide powder bath.

The polyamide powder grains contacting the hot outer ring adheres to the outer ring and as such, polyamide coating is obtained on the outer diameter and sidewall surfaces of the outer ring. The waiting period in the powder bath is arranged according to the desired coating thickness.

Finally, the outer rings are ground to be brought to the desired outer diameter measure after they are cooled and ready for the mounting.

With the subject method, since the polyamide material is an insulating material and nonporous, the electrical insulation can be provided by 100%.

The outer ring that has been coated with polyamide by means of the method subject to the invention, the inner ring, the rolling elements, the cage and shields are assembled by means of known and used methods similar to the standard rolling bearings, without the need for an application of a different method.

## Claims

1. The invention is an electrical insulated bearing production method wherein the method contains the steps of;
- stacking bearing outer rings on top of each other in such a way that their side surfaces are in contact with each other,
- applying liquid seal or rubber spray which contains silicon and which is resistant to heat up to 270C° on to the raceway of the outer rings stacked on top of each other which will not be coated with polyamide,
- cleaning the external sidewall surface of the topmost of outer rings stacked on top of each other from the liquid seal or rubber spray containing heat resistant silicon by wiping this sidewall surface with perchloroethylene-impregnated cloth,
- coating the outer diameter and sidewall surfaces of the outer rings with primer by hanging the same on a bracket,
- heating the outer rings whose outer diameter and sidewall surfaces have been coated with primer to over 186C°, which is the melting temperature of the polyamide, by placing outer rings in a furnace,
- adhering the polyamide powders to the outer diameter and sidewall surfaces of the outer rings by melting.

2. A method according to Claim 1, wherein the primer is coated onto the outer ring outer diameter and sidewall surfaces using an immersion or spraying technique.

## Patentansprüche

1. Die Erfindung ist ein Verfahren zur Herstellung eines elektrisch isolierten Lagers, wobei das Verfahren die folgenden Schritte umfasst;
- Übereinanderstapeln der Lageraußenringe, so dass ihre Seitenflächen in Kontakt miteinander sind,
- Auftragen von silikonhaltigem, und bis 270°C hitzebeständigem Flüssigdichtung- oder Gummispray auf die Laufbahn der übereinander gestapelten Außenringe, die nicht mit Polyamid beschichtet werden sollen,
- Reinigen der äußeren Seitenwandfläche des obersten der übereinander gestapelten Außenringe von der Flüssigdichtung oder dem hitzebeständigen Silikon enthaltenden Gummispray durch Abwischen dieser Seitenwandfläche mit einem mit Perchlorethylen imprägnierten Tuch,
- Beschichten der Außendurchmesser- und Seitenwandflächen der Außenringe mit Primer durch Aufhängen derselben an einer Halterung,
- Erwärmen der Außenringe, deren Außendurchmesser und Seitenwandflächen mit Primer beschichtet wurden, auf über 186°C, was die Schmelztemperatur des Polyamids ist, indem die Außenringe in einen Ofen gelegt werden,
- Anhaften des Polyamidpulvers an den Außendurchmesser- und Seitenwandflächen der Außenringe durch Schmelzen.

2. Verfahren nach Anspruch 1, wobei die Primer auf den Außendurchmesser des Außenrings und die Seitenwandflächen unter Verwendung einer Spritz- oder Sprühtechnik aufgetragen wird.

## Revendications

1. L'invention est une méthode de production de roulement isolé électriquement dans laquelle la méthode contient les étapes suivantes;
- empiler les bagues extérieures des roulements les unes sur les autres de manière à ce que leurs surfaces latérales soient en contact les unes avec les autres,
- appliquer un joint liquide ou un spray en caoutchouc qui contient de silicone et qui résiste à la chaleur jusqu'à 270°C sur le chemin des bagues extérieures empilées les unes sur les autres qui ne seront pas revêtues de polyamide,
- nettoyer la surface externe des parois latérales de la partie la plus haute des bagues extérieures empilées les unes sur les autres du joint liquide ou du spray en caoutchouc contenant du silicone résistant à la chaleur en essuyant cette surface des parois latérales avec un chiffon imprégné de perchloroéthylène,
- revêtir le diamètre extérieur et les surfaces des parois latérales des bagues extérieures avec l'apprêt en les accrochant à un support,
- chauffer les bagues extérieures dont le diamètre extérieur et les surfaces des parois latérales ont été recouverts avec l'apprêt à plus de 186°C, qui est la température de fusion du polyamide, en plaçant les bagues extérieures dans un four,
- faire adhérer les poudres de polyamide au diamètre extérieur et aux surfaces des parois latérales des bagues extérieures par fusion.

2. Méthode selon la revendication 1, dans laquelle l'apprêt est revêtu sur le diamètre extérieur de la bague extérieure et sur les surfaces des parois latérales en utilisant une technique d'immersion ou de pulvérisation.
